# EUROPEAN PATENT SPECIFICATION

(11) **EP 2 794 741 B1**
(45) Date of publication and mention of the grant of the patent: **08.06.2016**
(21) Application number: 12809801.9
(22) Date of filing: 19.12.2012
(51) Int. Cl.: B29B 11/14, B29K 81/00, B29C 44/08, B29K 105/04, C08J 9/00, C08J 9/36, B29C 51/10

(54) **THERMOFORMED FOAM ARTICLES**
THERMOGEFORMTE SCHAUMARTIKEL
ARTICLES EN MOUSSE THERMOFORMÉE

(30) Priority: 22.12.2011 US 201161579112 P; 16.02.2012 EP 12155762; 12.10.2012 EP 12188357
(43) Date of publication of application: 29.10.2014
(73) Proprietor: Solvay Specialty Polymers USA, LLC., Alpharetta, GA 30005-3914 (US)
(72) Inventor: AXELRAD, Shari W, Atlanta, Georgia 30319 (US); GAUTAM, Keshav, Duluth, Georgia 30097 (US); KLESING, Armin, 56589 Niederbreitbach (DE); EL-HIBRI, Mohammad Jamal, Atlanta, Georgia 30328 (US); SCHELLES, Marc, B-2400 Geel (BE); KENKARE, Nirupama, Alpharetta, Georgia 30022 (US)
(74) Representative: Benvenuti, Federica
(86) International application number: PCT/EP2012/076116
(87) International publication number: WO 2013/092689

(56) References cited:
- WO-A1-2010/112508
- US-A- 4 710 522
- US-A1- 2010 324 171
- US-B1- 8 017 699

## Description

This application claims priority to U.S. provisional application No. 61/579112 filed December 22, 2011 and to European applications No. 12155762.3 filed on February 16, 2012 and No. 12188357.3 filed on October 12, 2012.

### Field of invention

The present invention relates to a method for manufacturing a thermoformed poly(biphenyl ether sulfone) foam article and said article made therefrom.

### Background of the invention

In lightweight applications across multiple market segments such as transport, mobile electronics, building materials, household goods, food service trays and medical, the articles must meet certain requirements, including notably high strength-to-weight ratio, toughness, dimensional stability in use, thermal insulation, acoustic insulation, transparency to radio frequencies, resistance to aviation fluids such as hydraulic fluid, fuel, cleaning fluids, disinfectants, insecticides, adhesives, paints, and coatings.

In transport applications, notably aircraft, it is especially desirable to maximize weight reduction in a manner that does not compromise the strength and/or chemical properties of any component manufactured from a thermoplastic material. One way to reduce the weight of a particular aircraft component is to manufacture the component from a material having a relatively low density. By lowering the density of the materials used to make aircraft parts, improved weight/strength performance can be achieved. Of course, any reduction in weight may not come at the expense of a significant reduction in strength and/or chemical properties, such as notably their resistance to aircraft liquids. Flammability characteristics are especially important in aircraft applications and any weight reductions must not result in poorer thermal oxidative degradation characteristics.

Thermoformed articles often suffer from drawbacks such as shrink and/or cracking especially upon thermo forming to steep part compound multiaxial bends, thus (i) increase of part density compared to unformed foam due to shrink, (ii) alternatively, weakening of mechanical performance compared to unformed foam, and (iii) difficulty to achieve and control part dimensions.

There is thus still a high need for methods for manufacturing thermoformed poly(biphenyl ether sulfone) foam articles which are characterized by dimensional stability in use, low degree of spring-back and shrink even at steep part angles, reliable performance at each point of the part and which can overcome all these drawbacks, mentioned above, and the thermoformed poly(biphenyl ether sulfone) foam articles made therefrom having excellent heat resistance, flame resistance, and environmental resistance, mechanical strength, and low-temperature impact resistance, and possesses excellent lightweight, thermal-insulating characteristics, soundproofing characteristics, vibration-proofing characteristics, chemical resistance, and recycling properties.

US 4,710,522 discloses a foamable and foamed composition comprising blends of an aromatic sulfone polymer, optionally comprising biphenyl units, a polyester and a polycarbonate.

### Summary of invention

The Applicant has now found surprisingly that a thermoformed poly(biphenyl ether sulfone) foam can be formed that combines contradicting properties such as high toughness in the application and low spring-back and shrink upon forming. Thus, the thermoformed poly(biphenyl ether sulfone) foam despite its strength and stiffness can be formed in well controlled circumstances into complex 3-dimensional thermoformed shapes.

The invention thus pertains to a method for manufacturing a thermoformed poly(biphenyl ether sulfone) foam article which comprises following three steps :
Step 1. preparing a poly(biphenyl ether sulfone) foamable composition [composition (FP)],
Step 2. foaming the composition (FP) to yield a foamed poly(biphenyl ether sulfone) material [foam (P) material], and
Step 3. molding said foam (P) material under the effect of heat and pressure to provide a thermoformed foamed article.

Another aspect of the present invention is directed to a thermoformed poly(biphenyl ether sulfone) foam article.

### Detailed description of embodiments

### Composition (FP)

The composition (FP) prepared in the first step of the method of the present invention comprises a poly(biphenyl ether sulfone) (P1) polymer in an amount above 50 wt. %, preferably above 80 wt. % ; more preferably above 90 wt. % ; more preferably above 95 wt. % and more preferably above 99 wt. %, based on the total weight of the composition (FP).

If desired, the composition (FP) comprises no other polymer than the poly(biphenyl ether sulfone) (P1).

In the rest of the text, the expressions "poly(biphenyl ether sulfone)" is understood, for the purposes of the invention, both in the plural and the singular, that is to say that the composition (FP), foam (P) material and the thermoformed foam article may comprise one or more than one poly(biphenyl ether sulfone) [poly(biphenyl ether sulfone) (P1)].

For the purpose of the present invention, the poly(biphenyl ether sulfone) (P1) is intended to denote a polycondensation polymer of which more than 50 wt. % of the recurring units are recurring units (R2) of one ore more formulae containing at least one biphenylene group selected from the group consisting of those complying with following formulae : 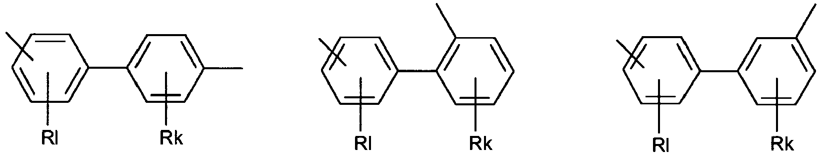 wherein R is selected from the group consisting of :
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and j,k and 1 equal or different from each other, are independently 0, 1, 2, 3 or 4 ; and
at least one ether group (-O-) and at least one sulfone group (-SO₂-).

The recurring units (R2) are recurring units of formula (A) as shown below :
- Ar¹-(T-Ar²)ₙ-O-Ar³-SO₂-[Ar⁴-(T-Ar²)ₙ-SO₂]ₘ-Ar⁵-O- (formula A) wherein :
- Ar¹, Ar², Ar³, Ar⁴, and Ar⁵, equal to or different from each other and at each occurrence, are independently an aromatic mono- or polynuclear group ; with the proviso that at least one Ar¹ through Ar⁵ is an aromatic moiety containing at least one biphenylene group, selected from the group consisting of those complying with the following formulae : 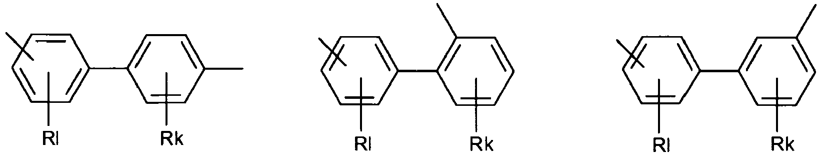
wherein R is selected from the group consisting of:
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and k and 1 equal or different from each other, are independently 0, 1, 2, 3 or 4, and

- each of T, equal to or different from each other, is a bond or a divalent group optionally comprising one or more than one heteroatom;
- n and m, equal to or different from each other, are independently zero or an integer of 1 to 5 ;

Preferably, Ar¹, Ar², Ar³, Ar⁴, Ar⁵ are equal or different from each other and are aromatic moieties preferably selected from the group consisting of those complying with following formulae : 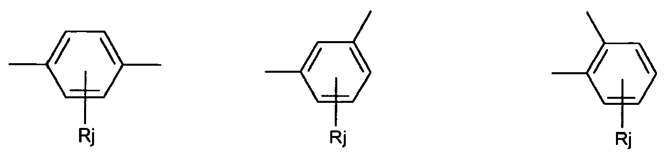 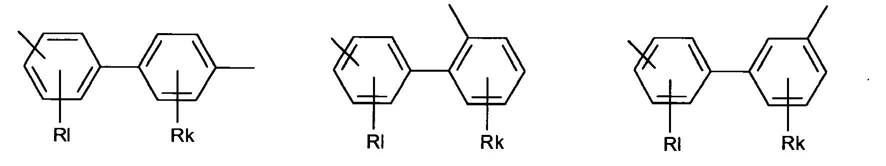 wherein R is selected from the group consisting of :
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and j,k and 1 equal or different from each other, are independently 0, 1, 2, 3 or 4, and with the proviso that at least one Ar¹ through Ar⁵ is an aromatic moiety containing at least one biphenylene group, selected from the group consisting of those complying with following formulae : 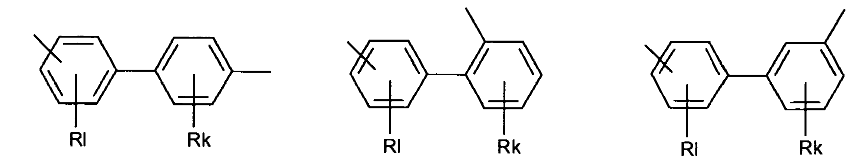
wherein R is selected from the group consisting of :
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and k and 1 equal or different from each other, are independently 0, 1, 2, 3 or 4.

Preferably, each of T, equal to or different from each other, is selected from the group consisting of a bond, -CH₂-; -O- ; -SO₂- ; -S- ;-C(O)- ; -C(CH₃)₂-; -C(CF₃)₂- ; -C(=CCl₂)- ; -C(CH₃)(CH₂CH₂COOH)-; -N=N- ; -R^{a}C=CR^{b}- ; where each R^{a} and R^{b} ; independently of one another, is a hydrogen or a C₁-C₁₂-alkyl, C₁-C₁₂-alkoxy, or C₆-C₁₈-aryl group ; -(CH₂)ₙ- and -(CF₂)ₙ-with n = integer from 1 to 6, or an aliphatic divalent group, linear or branched, of up to 6 carbon atoms ; and mixtures thereof.

More preferably, recurring units (R2) are selected from the group consisting of formulae (B) to (F), as below detailed, and mixtures thereof:

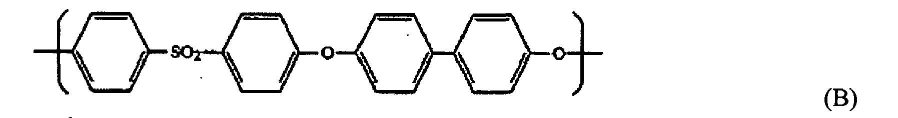

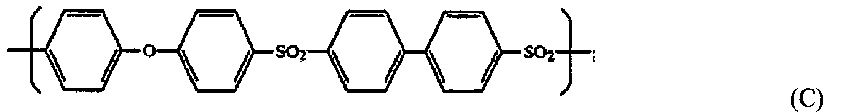

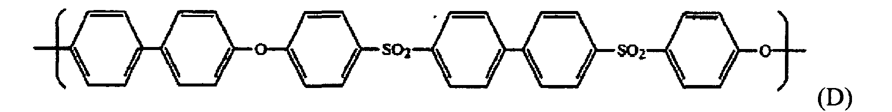

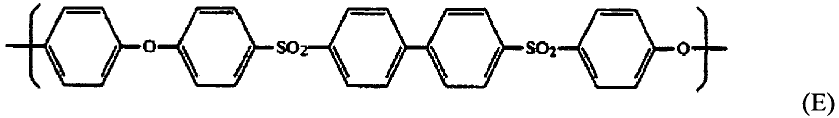

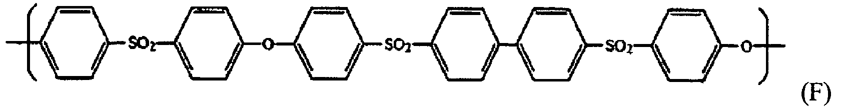

Still more preferably, recurring units (R2) are :

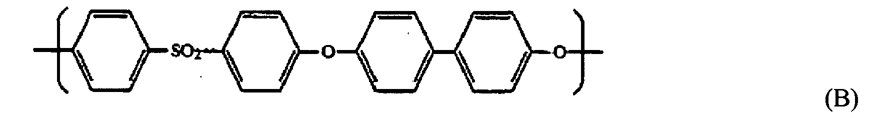

In another preferred embodiment, recurring units (R2) are of formula (D), shown below :

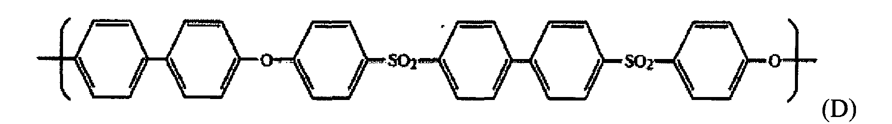

In yet another preferred embodiment, recurring units (R2) are of formula (F), shown below :

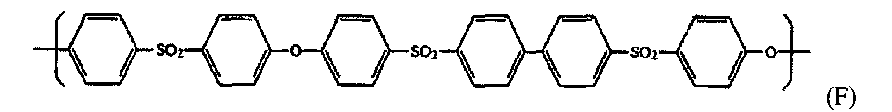

The poly(biphenyl ether sulfone) (P1) may be notably a homopolymer, a random, alternate or block copolymer. When the poly(biphenyl ether sulfone) (P1) is a copolymer, its recurring units may notably be composed of (i) recurring units (R2) of at least two different formulae selected from formulae (B) to (F), or (ii) recurring units (R2) of one or more formulae (B) to (F) and recurring units (R2*), different from recurring units (R2), such as : 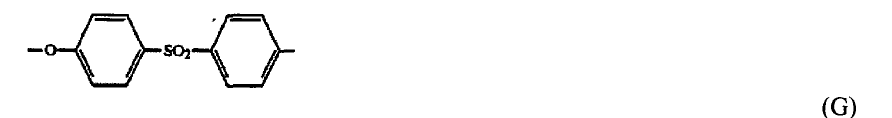 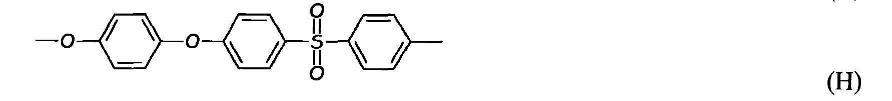 and

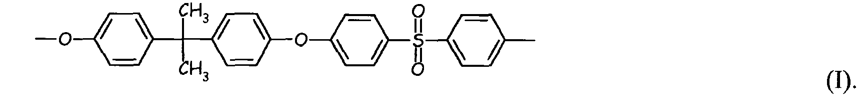

Preferably more than 75 wt. %, preferably more than 85 wt. %, preferably more than 95 wt. %, preferably more than 99 wt. % of the recurring units of the poly(biphenyl ether sulfone) (P1) are recurring units (R2).

Still, it is generally preferred that substantially all recurring units of the poly(biphenyl ether sulfone) (P1) are recurring units (R2), as detailed above ; chain defects, or very minor amounts of other units might be present, being understood that these latter do not substantially modify the properties of (R2).

The poly(biphenyl ether sulfone) (P1) is then preferably a polyphenylsulfone (PPSU).

For the purpose of the present invention, a polyphenylsulfone (PPSU) polymer is intended to denote any polymer of which more than 50 wt. % of the recurring units are recurring units (R2) of formula (B).

In a preferred embodiment of the present invention, more than 75 wt. % more preferably more than 90 wt. %, more preferably more than 99 wt. %, even more preferably all the recurring units of the poly(biphenyl ether sulfone) (P1) are of formula (B).

RADEL^{®} R polyphenylsulfone from Solvay Specialty Polymers US, L.L.C. is an example of a commercially available PPSU homopolymer.

In another preferred embodiment of the present invention, more than 50 wt. %, more than 75 wt. %, more preferably more than 90 wt. %, more preferably more than 99 wt. %, even more preferably all the recurring units of the poly(biphenyl ether sulfone) (P1) are of formula (D).

SUPRADEL^{™} HTS high-temperature sulfone polymer from Solvay Specialty Polymers US, L.L.C. is an example of a commercially available poly(biphenyl ether sulfone) (P1) comprising more than 50 wt. % of the recurring units of formula (D).

In another preferred embodiment of the present invention, more than 50 wt. %, more than 75 wt. %, more preferably more than 90 wt. %, more preferably more than 99 wt. %, even more preferably all the recurring units of the poly(biphenyl ether sulfone) (P1) are of formula (F).

As mentioned above, the thermo formed foam article may comprise one or more than one poly(biphenyl ether sulfone) [poly(biphenyl ether sulfone) (P1)].

In a specific embodiment of the present invention, poly(biphenyl ether sulfone) (P1) may also be a blend composed of at least two poly(biphenyl ether sulfone) (P1) chosen from a group consisting of a (PPSU) polymer, as detailed above and a SUPRADEL^{™} HTS high-temperature sulfone polymer, as detailed above.

In this specific embodiment, the (PPSU) polymer is generally present in an amount of at least 5 wt. %, preferably of at least 10 wt. %, more preferably of at least 20 wt. %, more preferably of at least 30 wt. %, more preferably of at least 40 wt. %, based on the total weight of the (PPSU) polymer and SUPRADEL^{™} HTS high-temperature sulfone polymer. It is further understood that the weight percent of the (PPSU) polymer will generally be of at most 95 wt. %, more preferably of at most 90 wt. %, more preferably of at most 80 wt. %, more preferably of at most 70 wt. %, more preferably of at most 60 wt. %, based on the total weight of the (PPSU) polymer and SUPRADEL^{™} HTS high-temperature sulfone polymer.

Good results were obtained when the (PPSU) polymer is present in an amount of 40- 60 wt. % based on the total weight of the (PPSU) polymer and SUPRADEL^{™} HTS high-temperature sulfone polymer. Excellent results were obtained when the (PPSU) polymer is present in an amount of about 50 wt. % based on the total weight of the (PPSU) polymer and SUPRADEL^{™} HTS high-temperature sulfone polymer.

The poly(biphenyl ether sulfone) (P1) can be prepared by any method. The molecular weight of the poly(biphenyl ether sulfone) (P1), when determined as reduced viscosity in an appropriate solvent such as methylene chloride, chloroform, N-methylpyrrolidone, or the like, can be greater than or equal to 0.3 dl/g, or, more specifically, greater than or equal to 0.4 dl/g and, typically, will not exceed 1.5 dl/g.

The poly(biphenyl ether sulfone) (P1) weight average molecular weight can be 10,000 to 100,000 grams per mole (g/mol) as determined by gel permeation chromatography following ASTM D5296 standard, using polystyrene calibration curve. In some embodiments, the poly(biphenyl ether sulfone) (P1) weight average molecular weight can be 20,000 to 70,000 grams per mole (g/mol).

The poly(biphenyl ether sulfone) (P1) may have glass transition temperatures of 180 to 250°C, when determined according to ASTM D 4318.

Poly(biphenyl ether sulfone) (P1) polymers have been found particularly suitable in the method for manufacturing of the thermoformed foam article of the present invention because of their advantageous high toughness and impact strength, high impact resistance, high chemical resistance, exceptional hydrolytic stability, and very good inherent flame resistance.

According to one embodiment of the present invention, the composition (FP) prepared in the first step of the method of the invention, can further contain one or more ingredients other than the poly(biphenyl ether sulfone) (P1).

The composition (FP) may further contain conventional ingredients of polymeric compositions such as miscible polymers, or polymers that can be compatibilized with PPSU, notably polymers as polyetherimides or polyetheretherketones, additives such as UV absorbers ; stabilizers such as light stabilizers and others ; lubricants ; plasticizers ; pigments ; dyes ; colorants ; anti-static agents ; nucleating agents ; foaming agents ; blowing agents ; metal deactivators ; flame retardants and combinations comprising one or more of the foregoing additives. Antioxidants can be compounds such as phosphites, phosphorates, hindered phenols or mixtures thereof. Surfactants may also be added to help nucleate bubbles and stabilize them during the bubble growth phase of the foaming process.

The weight of said conventional ingredients, based on the total weight of polymer composition (FP) ranges advantageously from 0 to 15 %, preferably from 0 to 10 % and more preferably from 0 to 5 %.

If desired, the composition (FP) comprises more than 85 wt. % of the poly(biphenyl ether sulfone) (P1) with the proviso that the poly(biphenyl ether sulfone) (P1) are the only polymeric components in the composition (FP) and one or more optional ingredients such as additives ; stabilizers ; lubricants ; plasticizers ; pigments ; dyes ; colorants ; anti-static agents ; nucleating agents ; blowing agents ; metal deactivators ; antioxidants and surfactants might be present therein, without these components dramatically affecting relevant mechanical and toughness properties of the composition (FP).

In a preferred embodiment, the composition (FP) comprises more than 85 wt. % of the (PPSU) polymer, as detailed above, with the proviso that the (PPSU) polymer, is the only polymeric components in the composition (FP) and one or more optional ingredients such as additives ; stabilizers ; lubricants ; plasticizers ; pigments ; dyes ; colorants ; anti-static agents ; nucleating agents ; blowing agents ; metal deactivators ; antioxidants and surfactants might be present therein, without these components dramatically affecting relevant mechanical and toughness properties of the composition (FP).

In another preferred embodiment, the composition (FP) comprises more than 85 wt. % of a blend composed of at least two poly(biphenyl ether sulfone) (P1) chosen from a group consisting of a (PPSU) polymer, as detailed above and a SUPRADEL^{™} HTS high-temperature sulfone polymer, as detailed above, with the proviso that the (PPSU) polymer and the SUPRADEL^{™} HTS high-temperature sulfone polymer are the only polymeric components in the composition (FP) and one or more optional ingredients such as additives ; stabilizers ; lubricants ; plasticizers ; pigments ; dyes ; colorants ; anti-static agents ; nucleating agents ; blowing agents ; metal deactivators ; antioxidants and surfactants might be present therein, without these components dramatically affecting relevant mechanical and toughness properties of the composition (FP).

The expression 'polymeric components' is to be understood according to its usual meaning, i.e. encompassing compounds characterized by repeated linked units, having typically a molecular weight of 2 000 or more.

In Step 1. of the method of the invention, a nucleating agent, or blends of nucleating agents, can advantageously be added to the composition (FP).

In general, the nucleating agent helps control the structure of the foam (P) material, formed in step 2 of the method of the invention, by providing a site for bubble formation, and the greater the number of sites, the greater the number of bubbles and the less dense the final product can be, depending on processing conditions.

Suitable nucleating agent that may be used in the present invention include, but are not limited to, metallic oxides such as titanium dioxide, clays, talc, silicates, silica, aluminates, barites, titanates, borates, nitrides, notably boron nitride, and even some finely divided, unreactive metals, carbon-based materials (such as diamonds, carbon black, nanotubes and graphenes) or combinations including at least one of the foregoing agents. In alternative embodiments, silicon and any crosslinked organic material that is rigid and insoluble at the processing temperature may also function as nucleating agents.

In alternative embodiments, other fillers may be used provided they have the same effect as a nucleating agent in terms of providing a site for bubble formation. This includes fibrous fillers such as aramid fibers, carbon fibers, glass fibers, mineral fibers, or combinations including at least one of the foregoing fibers. Some nano-fillers and nano-reinforcements can also be used as nucleating agents. These include such materials as nano-silicates, nano-clays, carbon nanofibers and carbon nanotubes as well as graphenes and multi-layered graphitic nano-platelets.

In a preferred embodiment, the nucleating agent is preferably used in the following amounts : advantageously from 0.1 to 5 % by weight, preferably from 0.2 to 3 % by weight based in each case on the total weight of the composition (FP).

Generally, the composition (FP) can be prepared by a variety of methods involving intimate admixing of the polymer materials with any optional ingredient, as detailed above, desired in the formulation, for example by melt mixing or a combination of dry blending and melt mixing. Typically, the dry blending of the poly(biphenyl ether sulfone) (P1) and all other optional ingredients, as above details, is carried out by using high intensity mixers, such as notably Henschel-type mixers and ribbon mixers.

So obtained powder mixture may be suitable for direct use in the second step of the method or can be a concentrated mixture to be used as masterbatch and diluted in further amounts of the poly(biphenyl ether sulfone) (P1) in subsequent processing steps. Said masterbatches/concentrates can also be melt mixed prior to use in the second step of the method.

It is also possible to manufacture the composition (FP) of the invention by further melt compounding the powder mixture as above described. As said, melt compounding can be effected on the powder mixture as above detailed, or preferably directly on the poly(biphenyl ether sulfone) (P1) and any other possible ingredient. Conventional melt compounding devices, such as co-rotating and counter-rotating extruders, single screw extruders, co-kneaders, disc-pack processors and various other types of extrusion equipment can be used. Preferably, extruders, more preferably twin screw extruders can be used.

In case blowing agent(s) is/are comprised in composition (FP), specially designed extruders, i.e. extruders specifically designed to effectively control temperature such that further processes such as foaming is not prematurely initiated and such that the composition may be melted, blended, extruded and pelletized without premature foaming of the composition, are particularly preferred. The design of the compounding screw, e.g. flight pitch and width, clearance, length as well as operating conditions will be advantageously chosen so that sufficient heat and mechanical energy is provided to advantageously fully melt the powder mixture or the ingredients as above detailed and advantageously obtain a homogeneous distribution of the different ingredients, but still mild enough to advantageously keep the processing temperature of the composition below that in which foaming may be prematurely initiated, in case optional chemical foaming ingredients are comprised in the composition. Provided that the processing temperature is kept well above the softening point of the poly(biphenyl ether sulfone) (P1) and, when chemical foaming agent(s) are comprised, below the decomposition temperature of any of said chemical foaming components possibly present, it is advantageously possible to obtain strand extrudates of the composition (FP) of the invention which have not undergone significant foaming. Such strand extrudates can be chopped by means e.g. of a rotating cutting knife aligned downwards the die plate, generally with an underwater device, which assures perfect cutting knife to die plate alignment, and collected under the form of pellets or beads. Alternatively, the strand extrudates may also be cooled using a water bath of conveyor belt and then cut using a pelletizer. Thus, for example composition (FP) which may be present in the form of pellets or beads can then be further used in the second step of the method of the present invention.

### Foam (P) material

According to the method of the present invention, the composition (FP), as mentioned above, is foamed in Step 2. to yield the foam (P) material having high void content, low apparent density and substantially uniform cell sizes.

For the purpose of the present invention, the term "substantially uniform cell size" is intended to denote a foam material wherein the magnitude of one standard deviation of the cell size frequency distribution is at most 40 % of the value of the estimated mean cell size, so as an example, a foam with an estimated mean cell size of 100 micrometers and a standard deviation of 35 micrometers in cell size distribution would fall within the scope of the above definition for "substantially uniform cell size".

It has been found that the foam (P) material prepared in the second step of the method of the present invention, endowed by having uniform cell size, has improved mechanical properties since larger cells act as a weak point in the foam, which may initiate a failure and, in addition, maintaining ability to be thermoformed, that is to say shaped into articles of possibly complex geometry by combined action of heat and pressure.

Foaming of polymer composition (FP) in Step 2. of the method of the present invention can be performed using any foaming technique, which is capable of yielding the foam (P) material. Suitable foaming techniques that may be used in the present invention include, but are not limited to, pressure cell processes, autoclave processes, extrusion processes, direct (variotherm) injection processes and bead foaming.

The extrusion process is most preferred.

A pressure cell process, for example, is carried out batchwise ; the composition (FP) is charged in a pressure cell with a gas under a pressure that is higher than atmospheric pressure and at a temperature that is below the glass transition temperature of the polymer/gas mixture. The temperature is then raised to a temperature that is above the glass transition temperature but below the critical temperature of the polymer (P1)/gas mixture, by immersing in a heating bath, and then the gas is driven out of the mixture to produce the foam (P) material. Transfer from the pressure cell to the heating bath is generally carried out as fast as possible, considering that the dissolved gas can quickly diffuse out of the polymer at ambient pressure. After foaming, the foam (P) material is generally quenched in an ethanol/water mixture at about 20°C.

In an autoclave process, for example, the composition (FP) is charged with a gas in an autoclave at a temperature that is above the glass transition temperature of the polymer (P1)/gas mixture and foaming is induced by spontaneous release of the pressure. In contrast to the pressure cell process, in which the gas-charged composition (FP) is normally transferred to a heating bath to raise the temperature to above the glass transition temperature but below the critical temperature of the polymer/gas mixture, the autoclave process does not need a heating stage as the polymer is already at the required temperature that is above the glass transition temperature on charging with the gas.

An extrusion process, in contrast to the two techniques described above, is a continuous process. In general, in the extrusion process, the foam (P) material is formed by melting the composition (FP) in the form of a pellet or a bead, mixing the so obtained molten mixture with at least one blowing agent under pressure. At the exit of the extruder, during depressurization, the blowing agent vaporizes and, by absorbing heat of evaporation, rapidly cools the molten mass thereby forming the foam (P) material.

Any suitable extrusion equipment capable of processing composition (FP) can be used for the extrusion. For example, single or multiple-screw extruders can be used, with a tandem extruder being preferred.

In a specific preferred embodiment, the composition (FP) is molten in a primary extruder. The blowing agent is then fed into the primary extruder and mixed into the molten blend under high pressure and temperature in the last sections of the primary extruder. The molten mass is then fed under pressure to a secondary extruder, which is used to cool the material to be foamed and transport it through a die to a calibrator to form the foam (P) material. The calibrator helps to control the cooling rate and expansion of the foam (P) material. Therefore, it is beneficial in helping to control the thickness, width and density of the foam (P) material. The die is operated at a specific temperature range and pressure range to provide the necessary melt strength and to suppress premature foaming in the die. In one embodiment, a single screw extruder is used for both the primary extruder and the secondary extruder. In an alternative embodiment, a twin-screw extruder is used for both the primary extruder and the secondary extruder. In yet another alternative embodiment, a single screw extruder is used for one of the primary extruder or the secondary extruder and a twin-screw extruder is used for the other.

In Step 2. of the method of the present invention, blowing agent, or blends of blowing agents, can advantageously be used in different amounts depending on the desired density of the foam (P) material. In one preferred embodiment of the present invention, the amount used of the blowing agent is from 0.5 to 15 percent by weight, preferably from 1 to 12 percent by weight, particularly preferably from 3 to 10 percent by weight, based in each case on the total weight of the composition (FP).

In general, a larger amount of blowing agent may be used for embodiments where lower density foams are to be formed.

In general, the blowing agent is selected to be sufficiently soluble to grow uniformly the voids into the bubbles that form a foam material having the selected density. As a result, if all of the parameters including solubility of the blowing agent with the poly(biphenyl ether sulfone) (P1) melt (at pressure, temperature and shear rate) are balanced and the walls of the bubbles are sufficiently stable such that they do not rupture or coalesce until the viscosity/melt strength of the resin/ blowing agent is strong enough to form a stable foam (P) materialas it cools, the result is a good, uniform, small celled foam (P) material having a selected density.

In general, the type of foam (P) material to be produced may also vary depending on other factors such as the presence of nucleating agent particles, the loading and/or process conditions, and the type of equipment used to form the foam materials.

Having regards to the nature of the blowing agent, the foaming process may be a chemical or a physical foaming process.

In one preferred embodiment, the foaming process is a physical foaming process.

In a physically foaming process, use is made of physical foaming ingredients, such as physical blowing agents and optionally nucleating agents.

Physical foaming agents generally refer to those compounds that are in the gaseous state in the foaming conditions (generally high temperature and pressure) because of their physical properties.

The physical foaming agents can be fed to the equipment, wherein foaming takes place, either in their gaseous form, or in any other form, from which a gas will be generated via a physical process (e.g. evaporation, desorption). Otherwise, physical foaming agent may be included in the pre-formed composition (FP), to be introduced in the foaming equipment.

In Step 2. of the method of the present invention, any conventional physical blowing agent can be used such as inert gases, e.g. CO₂, nitrogen, argon ; hydrocarbons, such as propane, butane, pentane, hexane ; aliphatic alcohols, such as methanol, ethanol, propanol, isopropanol, butanol; aliphatic ketones, such as acetone, methyl ethyl ketone ; aliphatic esters, such as methyl and ethyl acetate ; fluorinated hydrocarbons, such as
1,1,1,2-tetrafluoroethane (HFC 134a) and difluoroethane (HFC 152a) ; and mixtures thereof.

It is understood that as the physical blowing agent is supplied in fluid form to a melt, it advantageously generates bubbles, as the melt passes through the die and is de-pressurized. This may also be realized in extrusion devices.

In an alternative embodiment of the present invention, the foaming process is a chemical foaming process.

In a chemical foaming process, use is generally made of a chemical foaming agent, in particular a chemical blowing agent.

Chemical foaming agents generally refer to those compositions which decompose or react under the influence of heat in foaming conditions, to generate a foaming gas.

Chemical foaming agents can be comprised in the composition (FP) thereby generating in situ the foaming gas or can be added in present Step 2 of the present invention. Chemical foaming may also be realized in extrusion devices.

Suitable chemical foaming agents include notably simple salts such as ammonium or sodium bicarbonate, nitrogen evolving foaming agents ; notably aromatic, aliphatic-aromatic and aliphatic azo and diazo compounds, such as azodicarbonamide and sulphonhydrazides, such as benzene sulphonhydrazide and oxy-bis(benzenesulphonhydrazide). Said chemical foaming agents can optionally be mixed with suitable activators, such as for example amines and amides, urea, sulphonhydrazides (which may also act as secondary foaming agent) ; and the like.

While the foam (P) material is substantially free of the blowing agents, it is contemplated that residual amounts of the one or more blowing agents may remain in the foam material, although these residual amounts are not sufficient to adversely affect the foam characteristics of the foam (P) material.

In alternative embodiments, any of the residual blowing agent may be further reduced by exposing the foam (P) material further to a heat cycle.

In one embodiment of the present invention, the foam (P) material formed in Step 2. of the present invention has advantageously a density in the range from 10 to 170 kg/m³, preferably from 20 to 150 kg/m³, more preferably from 20 to 100 kg/m³, even more preferably from 20 to 55 kg/m³.

The foam (P) material of the present invention has advantageously an average cell size of less than 500 microns, preferably less than 100 microns, more preferably less than 50 microns.

The density can be measured according to ASTM D1622.

The cell size can be measured using optical or scanning electron microscopy.

The foam (P) material formed in Step 2. of the present invention may be in the form of a panel, a sheet or a film. It is also understood that the foam (P) material can be manufactured as a sheet or a panel either supported onto a supporting film or sandwiched between two supporting films. Such foam (P) material pre-forms are used in the Step 3. of the method of the present invention. More preferably, the foam (P) material is in the form of a foam panel or a foam film. Most preferably the foam (P) material is in the form of a foam panel.

In one specific embodiment of the method of the present invention, the foam panel formed in the Step 2. of the method of the present invention has advantageously a thickness in the range of from 1 mm to 30 mm, preferably from 3 mm to 10 mm, more preferably from 4 mm to 6 mm.

In another specific embodiment of the method of the present invention, the foam film formed in the Step 2. of the method of the present invention has advantageously a thickness in the range of from 0.1 mm to 3.0 mm, preferably from 0.2 mm to 1.0 mm, more preferably from 0.2 mm to 0.5 mm.

### Thermofoamed foamed article

In the method of the present invention, the molding of the foam (P) material in Step 3. under the effect of heat and pressure to provide a thermoformed foamed article can be accomplished following various thermoforming processes known in the art.

Suitable thermoforming processes that may be used in the present invention include, but are not limited to vacuum forming, pressure forming, matched mold forming, twin sheet thermoforming processes. The vacuum forming process is particularly preferred.

Typically, a thermoforming process can be divided into four steps : (i) pre-forming the foam (P) material under the effect of heating (i.e. the pre-heating step), (ii) forming the thermoformed foamed article by holding the foam (P) material against a mold under pressure differential and heating (i.e. the forming step) (iii) cooling the thermoformed foamed article in the mold (i.e. the cooling step) (iv) trimming the thermoformed foamed article (i.e. the trimming step).

Any suitable thermoforming equipment capable of thermoforming the foam (P) material can be used in step 3. of the method of the present invention.

For example a vacuum table can be used with a temperature controlled vacuum table being preferred.

The pre-forming of the foam (P) material in step (i) is typically carried out by pre-heating the foam (P) material to its forming temperature by using for example conduction heaters such as notably contact heaters, convection heaters, such as notably gas fired heaters, hot air circulating ovens, induction headers or radiation heaters, such as notably, infrared-light-spectrum wavelengths heaters, radio-frequency heaters. Hot air circulating ovens are particularly preferred.

For the purpose of the present invention, the term "forming temperature" is intended to denote a temperature at which the polymer can be shaped under a controlled deformation rate but not so high as to cause excessive softening and collapse of the foam.

During the pre-heating step (i), the foam (P) material is generally pre-heated up to a temperature of at least 200°C, preferably at least 205°C and more preferably at least 210°C.

The foam (P) material is generally pre-heated up in step (i) for an interval of time of at least 10 min, preferably at least 30 min, more preferably at least 60 min.

The foam (P) material is generally pre-heated up in step (i) for an interval of time of at most 120 min, preferably at most 90 min, more preferably at most 70 min.

If desired, the forming step (ii) can be carried out without realizing the pre-heating step (i).

As said, during the forming step (ii), the foam (P) material is held against a temperature controlled mold under pressure differential.

The pressure in the forming step (ii) is advantageously at least 2 in. Hg, preferably at least 5 in. Hg, preferably at least 10 in. Hg.

The pressure in the forming step (ii) is advantageously at most 20 in. Hg, preferably at most 17 in. Hg, more preferably at most 15 in. Hg.

Said pressure differential can be suitably applied under the form of a vacuum, air pressure, mechanical aids such as plugs, rubber diaphragms, and combinations thereof.

Temperature in step (ii) is generally kept at the same temperature as in step (i).

In the vacuum forming process, as mentioned above, the pressure differential is applied under the form of a vacuum. Said vacuum can be applied using a variety of vacuum forming systems such as notably systems based on vacuum bagging techniques, heated vacuum forming tables.

A vacuum forming systems based on the vacuum bagging technique is particularly preferred.

It is understood that before applying vacuum, the pressure in the thermoforming equipment is equal to atmospheric pressure [(29.92 inches of mercury (in. Hg)].

In the forming step (ii), the vacuum can be applied in one stage or in two stages.

In a first embodiment in step (ii), the vacuum is applied in one stage.

In this embodiment, the vacuum is advantageously provided from atmospheric pressure to a maximum vacuum pressure level 1 [vacuum (1)] at a vacuum rate of at least 2 in. Hg/min, preferably of at least 4 in. Hg/min, more preferably of at least 6 in. Hg/min.

Vacuum (1) is advantageously at least 5 in. Hg, preferably at least 7 in. Hg, preferably at least 10 in. Hg.

Vacuum (1) is advantageously at most 20 in. Hg, preferably at most 17 in. Hg, more preferably at most 15 in. Hg.

In this embodiment, the vacuum is further kept constant at vacuum (1) advantageously for a period of at least 20 min, preferably of at least 30 min.

In a second more preferred embodiment in step (ii), the vacuum is applied in two stages.

In a first stage of the second embodiment, the vacuum is advantageously provided from atmospheric pressure to a vacuum pressure level 2 [vacuum (2)] at a vacuum rate of at least 0.2 in. Hg/min, preferably of at least 0.4 in. Hg/min, more preferably of at least 1.0 in. Hg/min.

In said first stage, the vacuum is advantageously provided from atmospheric pressure to vacuum (2) at a vacuum rate of at most 6.0 in. Hg/min, preferably of at most 4.0 in. Hg/min, more preferably of at most 2.0 in. Hg/min. Vacuum (2) is advantageously at least 1 in. Hg, preferably at least 3 in. Hg, more preferably at least 5 in. Hg.

Vacuum (2) is advantageously at most 20 in. Hg, preferably at most 17 in. Hg, more preferably at most 15 in. Hg.

In a second stage of the second embodiment, the vacuum is further kept constant at vacuum (2), or is continuously increased until a maximum vacuum level 3 [vacuum (3)] or is increased in a stepwise manner until vacuum (3).

Vacuum (3) is advantageously at least 5 in. Hg, preferably at least 7 in. Hg, more preferably at least 10 in. Hg.

Vacuum (3) is advantageously at most 20 in. Hg, preferably at most 17 in. Hg, more preferably at most 15 in. Hg.

In one embodiment of the method of the invention, the vacuum in the second stage is continuously increased until vacuum (3) at a vacuum rate of at least 0.2 in. Hg/min, preferably of at least 0.4 in. Hg/min, more preferably of at least 1.0 in. Hg/min.

In said second stage, the vacuum is advantageously provided from atmospheric pressure to vacuum (3) at a vacuum rate of at most 6.0 in. Hg/min, preferably of at most 4.0 in. Hg/min, more preferably of at most 2.0 in. Hg/min.

In another embodiment of the method of the invention, the vacuum in the second stage is increased periodically in a stepwise manner until vacuum (3) whereby the vacuum in each step is advantageously increased at an amount ranging from 0.2 in. Hg to 10 in. Hg, preferably from 0.5 in. Hg to 5 in. Hg, even more preferably from 0.8 in. Hg to 1.5 in. Hg in corresponding periods varying from 0.1 to 20 min, preferably from 1 to 10 min, more preferably from 3 to 6 min. Good results were obtained when the vacuum was increased stepwise with increments of 1 in. Hg about every 5 minutes.

The cooling step (iii) and the trimming step (iv) in step 3. of the method of the present invention are typically carried out according to standard methods known in the art.

An aspect of the present invention also provides a thermo foamed article comprising at least one component comprising the foam (P) material, as detailed above, which provides various advantages over prior art parts and articles, in particular improved spring back, minimized shrinkage. Preferably, the thermofoamed article consists of the foam (P) material as detailed above.

In one embodiment of the present invention, the article is an aircraft structural component such as notably ceiling panels, sidewall panels, floor panels, privacy panels, stow bins, hand rails for stow bins, tablets, wet cell panels, ducts and plenums, passenger service units, galleys and galley doors, dado panels, cargo panels, seat shells.

In another embodiment of the present invention, the article is a mobile electronic device such as notably a laptop, a mobile phone, a GPS, a tablet, personal digital assistants, portable recording devices, portable reproducing devices and portable radio receives.

In yet another embodiment of the present invention, the article is a medical device such as notably medical trays, sterilization-resistant articles.

In yet another embodiment of the present invention, the article is a building material, a household good such as notably food service trays and the like.

Should the disclosure of any patents, patent applications, and publications which are incorporated herein by reference conflict with the description of the present application to the extent that it may render a term unclear, the present description shall take precedence.

### EXAMPLES

The invention will now be described in more details with reference to the following examples, whose purpose is merely illustrative and not intended to limit the scope of the invention.

### Raw materials

*Titanium Dioxide :* -Tipure^{®} R-105 titanium dioxide, a rutile TiO₂ manufactured by the chloride process, treated with silica and alumina.
RADEL^{®} R PPSU from Solvay Specialty Polymers USA, L.L.C.
SUPRADEL^{™} HTS -2600NT from Solvay Specialty Polymers USA, L.L.C.
RADEL^{®} R 5100 PPSU from Solvay Specialty Polymers USA, L.L.C.

### General procedure for the preparation of the foam material (P)

A polymer or polymer mixture was compounded with 2 parts of TiO₂ per hundred parts of resin. Compounding into pellets was performed on a Berstorff 25 mm twin screw extruder having an L/D ratio of 40:1 and eight barrel sections, of which sections 2-8 are equipped with heating and cooling. In each case, the base polymer pellets and the TiO₂ were first tumble-blended for twenty minutes and then the mix was fed to the throat of the extruder. The extruder was set at a barrel temperature of 330°C for barrel sections 2-8. The die temperature was set at 340°C and a screw speed of 200 rpm was used along with a throughput rate of 25 lb/hr for each of the four formulations. Vacuum venting of the melt was performed at barrel section 7. The extrudate from the extruder in each case was cooled in a water trough and then pelletized. The pellets produced from the formulation are dried at temperatures between 130 and 180°C for 8 hours and are next fed to the foaming set up which consisted of a 41 mm diameter Reifenhauser twin screw extruders that is set in series with a 50 mm Reifenhauser single screw extruder. The first extruder (A extruder) output fed via a melt pipe directly into the second (B extruder) in a T-configuration. The A extruder had an L/D ratio of 43 while the B extruder had an L/D of 30. The B extruder was equipped with a 1 mm slit die. The pellets produced from the formulation was fed to the A extruder where it was melted. The injection point for the blowing agent was located at two thirds of the way down the axial length of the A extruder. Isopropanol was metered and injected into the polymer melt at pressures of 60-300 bar depending on the present melt pressure in the extruder The homogenized polymer melt and isopropanol mixture was then fed into the B extruder where the mixture was cooled down to temperatures between 180 and 230°C. The mixture is then extruded through the slit die and into the calibrator to form a foam.

### Example 1

A foamed panel of 19.1 mm thickness was produced from RADEL^{®} R PPSU from Solvay Specialty Polymers USA, L.L.C. according to the general procedure, as described above. Said foamed panel was further sliced to 5mm using a horizontal band saw and used for thermoforming according to the general procedure described below, yielding a thermoformed foam article.

Scanning electron microscopy (SEM) analysis on the cross section of the sheet showed that the boards were of essentially uniform cell morphology throughout.

### Example 2

A foamed panel is produced from SUPRADEL^{™} HTS high-temperature sulfone polymer from Solvay Specialty Polymers US, L.L.C according to the general procedure, as described above, by using now 2 parts per 100 by weight of TiO₂, and the homogenized polymer melt and isopropanol mixture is now cooled down to temperatures between 230°C and 280°C in extruder B.

Scanning electron microscopy (SEM) analysis on the cross section of the sheet shows that the boards are of essentially uniform cell morphology throughout.

Said foamed panel is further sliced to 5 mm using a horizontal band saw and is used for thermoforming. The thermoforming is carried out according to the general procedure as described below, but the preheating and thermoforming temperature is increased to 255°C.

### Example 3

Example 3 is carried out as described for example 2 by using a poly(biphenyl ether sulfone) (P1) having all recurring units of formula (F).

### Foaming procedure for the preparation of examples 4 and 5

Polymer pellets of SUPRADEL^{™} HTS or blends of SUPRADEL^{™} HTS and RADEL^{®} R PPSU precompounded with the appropriate amount of TiO₂ (see Table 1) were fed into a foaming setup which consisted of a Collins twin screw extruder with a screw diameter of 25 mm, set in series with a single screw extruder with a screw diameter of 45 mm. The output of the first extruder (A extruder) was fed directly into the second extruder (B extruder) set in a right angle configuration. The A extruder had a L/D ratio of 42 and the B extruder had a L/D ratio of 30. The B extruder was equipped with a 0.6 mm slit die. The pellets produced from the formulation were fed to the A extruder where they were melted (see Table 1, the melt temperature). The injection point for the blowing agent was located at two thirds of the way down the axial length of the A extruder. Isopropanol (9 % wt.) was metered and injected into the polymer melt at pressures of 60-150 bar depending on the present melt pressure in the extruder. The homogenized polymer melt and isopropanol mixture were then fed into the B extruder where the mixture was cooled down to temperatures between 250 and 280°C. The mixture was then extruded through the slit die to form a foamed film. The results are summarized in Table 1.

**Table 1**

| **Examples N°** | **4** | **5** |
|---|---|---|
| SUPRADELTM HTS -2600NT (% wt.)^{a} | 100.0 | 50.0 |
| RADEL^{®} R 5100 PPSU (% wt.)^{a} | - | 50.0 |
| TiO₂ (% wt.)^{b} | - | 0.5 |
| Isopropanol (% wt.)^{b} | 9.0 | 9.0 |
| Melt temperature (°C) | 274 | 257 |

| **Foam properties** | | |
|---|---|---|
| Density (kg/m³)^{c} | 148 | 82 |
| Thickness (mm) | 3.4 | 4.9 |
| Cell size (microns)^{d} | 99 | 96 |

| | | |
|---|---|---|
| (^{a}) % wt. relative to total weight of SUPRADELTM HTS -2600NT and RADEL^{®} R 5100 PPSU (^{b}) % wt. relative to total weight of all components in the composition (^{c}) the density was determined according to the buoyancy method whereby the sample was immersed in water for about 1 minute and the displaced volume was measured (Archimedes principle). In said buoyancy technique weighing of the foam specimens was carried out in air and in water as in the procedure of ASTM method D792. (^{d}) cell size and cell size distribution in the foams obtained were characterized by scanning electron microscopy (SEM). Image analysis of the SEM images of foam cross sections was performed using the "ImageJ" image analysis software Version 1.44 which is publically available on the Internet. | | |

### General procedure for thermoforming of the foam material (P)

The clay mold and the foam material (P) were preheated in an hot air circulating oven to a temperature of 210°C and preheated for a short time. After preheating the mold to 210°C, said mold was removed from the hot air circulating oven, and placed on a 1/4" aluminum plate. Between the mold and the plate, a nylon breather cloth was placed. The foam was then placed on the mold, covered with another piece of breather cloth, and pinned down a nylon bagging film with tacky tape thereby forming a bagging system. A quick release valve was inserted into the bagging system to allow bringing said system under vacuum. The whole bagging system was placed in the hot air circulating oven maintained at a temperature of 210°C. After 6 minutes of stabilization at 210°C, a vacuum was applied to 5 in. Hg in a time period of 1 min. Every 5 minutes thereafter, the vacuum was stepwise increased by 1 in. Hg. After 30 more minutes, the thermoformed part had been formed against the mold without cracking. The hot air circulating oven was cooled down the oven to room temperature and when the mold center temperature reached 120°C inside, the vacuum was released. The thermoformed part was removed.

### Example 6

Foam material of example 4 is thermoformed according to the general procedure, as detailed above, instead now the hot air circulating oven was preheated to 220°C and the foam was placed on a metal mold. Said assembly was then placed on a 1/4" aluminum plate. The whole bagging system was now placed in the hot air circulating oven maintained at a temperature of 220°C. After 5 minutes of stabilization, a vacuum of 7.5 in Hg was applied for a time period of an additional 5 minutes. Instead, at this stage the foam was now formed over the mold without cracking. The thermoformed part shows no springback and has a density of 145 kg/m³.

### Example 7

Foam material of example 5 is thermoformed in the same way as described for example 6. The thermoformed part shows no springback and has a density of 81 kg/m³.

## Claims

1. A method for manufacturing a thermoformed poly(biphenyl ether sulfone) foam article which comprises following three steps :
Step 1. preparing a poly(biphenyl ether sulfone) foamable composition [composition (FP)],
Step 2. foaming the composition (FP) to yield a foamed poly(biphenyl ether sulfone) material [foam (P) material], and
Step 3. molding said foam (P) material under the effect of heat and pressure to provide a thermoformed foamed article,
wherein the composition (FP) comprises a poly(biphenyl ether sulfone) (P1) polymer in an amount above 50 wt. %, based on the total weight of the composition (FP),
and wherein more than 50 wt. % of the recurring units of the poly(biphenyl ether sulfone) (P1) polymer are recurring units (R2) of formula (A) :
Ar¹-(T-Ar²)ₙ-O-Ar³-SO₂-[Ar⁴-(T-Ar²)ₙ-SO₂]ₘ-Ar⁵-O- (formula A)
wherein :
- Ar¹, Ar², Ar³, Ar⁴, and Ar⁵, equal to or different from each other and at each occurrence, are independently an aromatic mono- or polynuclear group ; with the proviso that at least one Ar¹ through Ar⁵ is an aromatic moiety containing at least one biphenylene group, selected from the group consisting of those complying with the following formulae : 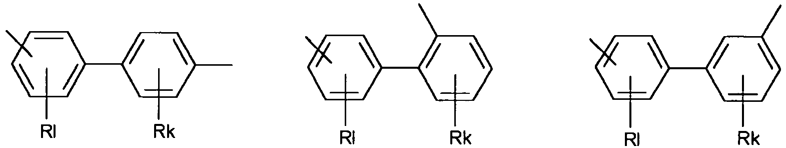
wherein R is selected from the group consisting of:
hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and k and 1 equal or different from each other, are independently 0, 1, 2, 3 or 4, and
each of T, equal to or different from each other, is a bond or a divalent group optionally comprising one or more than one heteroatom ;
n and m, equal to or different from each other, are independently zero or an integer of 1 to 5.

2. The method according to claim 1, wherein a nucleating agent is used in Step 1. in an amount from 0.1 to 5 % by weight based on the total weight of the composition (FP).

3. The method according to any one of claims 1 to 2, wherein the foaming in Step 2. is performed by a foaming technique selected from a group consisting of pressure cell processes, autoclave processes, extrusion processes, direct (variotherm) injection processes and bead foaming.

4. The method according to claim 3, wherein a blowing agent is used in Step 2. in an amount from 1 to 15 % by weight based on the total weight of the composition (FP).

5. The method according to any one of claims 1 to 4, wherein the molding of the foam (P) material in Step 3. is performed by a thermoforming process selected from a group consisting of vacuum forming, pressure forming, matched mold forming and twin sheet thermoforming processes.

6. The method according to claim 5, wherein the thermoforming process is performed in four steps : (i) pre-forming the foam (P) material under the effect of heating (i.e. the pre-heating step), (ii) forming the thermoformed foamed article by holding the foam (P) material against a mold under pressure differential and heating (i.e. the forming step) (iii) cooling the thermoformed foamed article in the mold (i.e. the cooling step) (iv) trimming the thermoformed foamed article (i.e. the trimming step).

7. The method according to any one of claims 5 or 6, wherein the thermoforming process is a vacuum forming process.

8. The method according to any one of claims 6 or 7, wherein the foam (P) material is pre-heated up in the pre-heating step (i) to a temperature of at least 200°C and for an interval of time of least 10 min.

9. The method according to any one of claims 6 to 8, wherein, the foam (P) material in the forming step (ii) is held against a temperature controlled mold under pressure differential wherein said pressure is at least 2 in. Hg, the pressure differential is preferably under the form of a vacuum.

10. The method according to claim 9, wherein the vacuum is applied in one stage and is provided from atmospheric pressure to a maximum vacuum pressure level 1 [vacuum (1)] of at least 5 in. Hg and a vacuum rate of at least 2 in. Hg/min.

11. The method according to claim 9, wherein the vacuum is applied in two stages, wherein in the first stage, the vacuum is provided from atmospheric pressure to a vacuum pressure level 2 [vacuum (2)] of at least 1 in. Hg and at a vacuum rate of at least 0.2 in. Hg/min and in a second stage, the vacuum is further kept constant at vacuum (2), or is continuously increased until a maximum vacuum level 3 [vacuum (3)] of at least 5 in. Hg or is increased in a stepwise manner until vacuum (3).

12. A thermofoamed article prepared according to the method according to any one of claims 1 to 11.

13. The thermofoamed article according to claim 12, wherein said article is an aircraft structural component, a mobile electronic device, a medical device, a building material or a household good.

## Patentansprüche

1. Verfahren zur Herstellung eines thermogeformten Poly(biphenylethersulfon)-Schaumstoffartikels, das die folgenden drei Schritte umfasst :
Schritt 1. Herstellen einer verschäumbaren Poly(biphenylethersulfon)-Zusammensetzung [Zusammensetzung (FP)],
Schritt 2. Verschäumen der Zusammensetzung (FP) zu einem verschäumten Poly(biphenylethersulfon)-Material [Schaumstoffmaterial (P)] und
Schritt 3. Formen des Schaumstoffmaterials (P) unter dem Einfluss von Wärme und Druck zur Bereitstellung eines thermogeformten verschäumten Artikels,
wobei die Zusammensetzung (FP) ein Poly(biphenylethersulfon)-Polymer (P1) in einer Menge von mehr als 50 Gew.- %, bezogen auf das Gesamtgewicht der Zusammensetzung (FP), umfasst
und wobei es sich bei mehr als 50 Gew.- % der Wiederholungseinheiten des Poly(biphenylethersulfon)-Polymers (P1) um Wiederholungseinheiten (R2) der Formel (A) handelt :
Ar¹-(T-Ar²)ₙ-O-Ar³-SO₂-[Ar⁴-(T-Ar²)ₙ-SO₂]ₘ-Ar⁵-O- (Formel A)
wobei:
- Ar¹, Ar², Ar³, Ar⁴ und Ar⁵ gleich oder voneinander verschieden sind und bei jedem Auftreten unabhängig für eine aromatische ein- oder mehrkernige Gruppe stehen; mit der Maßgabe, dass mindestens ein Ar¹ bis Ar⁵ für eine aromatische Gruppierung mit mindestens einer Biphenylengruppe steht, die aus der Gruppe bestehend aus denjenigen, die den folgenden Formeln entsprechen, ausgewählt ist : 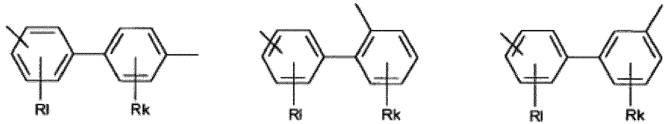
wobei R aus der Gruppe bestehend aus :
Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternären Ammonium ausgewählt ist und k und 1 gleich oder voneinander verschieden sind und unabhängig für 0, 1, 2, 3 oder 4 stehen, und
T jeweils gleich oder voneinander verschieden ist und für eine Bindung oder eine zweiwertige Gruppe, die gegebenenfalls ein oder mehr als ein Heteroatom umfasst, steht;
n und m gleich oder voneinander verschieden sind und unabhängig für null oder eine ganze Zahl von 1 bis 5 stehen.

2. Verfahren nach Anspruch 1, bei dem in Schritt 1. ein Nukleierungsmittel in einer Menge von 0,1 bis 5 Gew.- %, bezogen auf das Gesamtgewicht der Zusammensetzung (FP), verwendet wird.

3. Verfahren nach einem der Ansprüche 1 bis 2, wobei das Verschäumen in Schritt 2. durch eine Verschäumungstechnik aus der Gruppe bestehend aus Druckzellenprozessen, Autoklavenprozessen, Extrusionsprozessen, Direkt(Variotherm)-Spritzgussprozessen und Partikelschäumprozessen durchgeführt wird.

4. Verfahren nach Anspruch 3, bei dem in Schritt 2. ein Treibmittel in einer Menge von 1 bis 15 Gew.- %, bezogen auf das Gesamtgewicht der Zusammensetzung (FP), verwendet wird.

5. Verfahren nach einem der Ansprüche 1 bis 4, bei dem das Formen des Schaumstoffmaterials (P) in Schritt 3. durch einen Thermoformpozess aus der Gruppe bestehend aus Vakuumformprozessen, Druckformprozessen, Formprozessen mit zweiteiligen Werkzeugen und Twin-Sheet-Formprozessen durchgeführt wird.

6. Verfahren nach Anspruch 5, bei dem der Thermoformprozess in vier Schritten durchgeführt wird : (i) Vorformen des Schaumstoffmaterials (P) unter dem Einfluss von Erwärmen (d.h. der Vorerwärmungsschritt), (ii) Formen des thermogeformten verschäumten Artikels durch Halten des Schaumstoffmaterials (P) gegen eine Form unter einer Druckdifferenz und Erwärmen (d.h. der Formungsschritt), (iii) Abkühlen des thermogeformten verschäumten Artikels in der Form (d.h. der Abkühlungsschritt), (iv) Beschneiden des thermogeformten verschäumten Artikels (d.h. der Beschneidungsschritt).

7. Verfahren nach einem der Ansprüche 5 oder 6, bei dem es sich bei dem Thermoformprozess um einen Vakuumformprozess handelt.

8. Verfahren nach einem der Ansprüche 6 oder 7, bei dem das Schaumstoffmaterial (P) im Vorerwärmungsschritt (i) auf eine Temperatur von mindestens 200°C und über einen Zeitraum von mindestens 10 min vorerwärmt wird.

9. Verfahren nach einem der Ansprüche 6 bis 8, bei dem das Schaumstoffmaterial (P) im Formungsschritt (ii) unter einer Druckdifferenz gegen eine temperaturgeregelte Form gehalten wird, wobei der Druck mindestens 2 Zoll Hg beträgt, wobei die Druckdifferenz vorzugsweise die Form eines Vakuums aufweist.

10. Verfahren nach Anspruch 9, bei dem das Vakuum in einer Stufe angelegt wird und von Normaldruck bis zu einem maximalen Vakuumdruckniveau 1 [Vakuum (1)] von mindestens 5 Zoll Hg und einer Vakuumrate von mindestens 2 Zoll Hg/min bereitgestellt wird.

11. Verfahren nach Anspruch 9, bei dem das Vakuum in zwei Stufen angelegt wird, wobei in der ersten Stufe das Vakuum von Normaldruck bis zu einem Vakuumdruckniveau 2 [Vakuum (2)] von mindestens 1 Zoll Hg und einer Vakuumrate von mindestens 0,2 Zoll Hg/min bereitgestellt wird und in einer zweiten Stufe das Vakuum ferner bei Vakuum (2) konstant gehalten oder kontinuierlich bis zu einem maximalen Vakuumniveau 3 [Vakuum (3)] von mindestens 5 Zoll Hg erhöht oder schrittweise bis Vakuum (3) erhöht wird.

12. Thermogeformter Artikel, hergestellt nach dem Verfahren nach einem der Ansprüche 1 bis 11.

13. Thermogeformter Artikel nach Anspruch 12, wobei es sich bei dem Artikel um ein Luftfahrzeugbauteil, eine mobile elektronische Vorrichtung, eine medizinische Vorrichtung, ein Baumaterial oder eine Haushaltsware handelt.

## Revendications

1. Procédé de fabrication d'un article en mousse de poly(biphényléthersulfone) thermoformée qui comprend les trois étapes suivantes :
Étape 1. préparer une composition expansible de poly(biphényléthersulfone) [composition (FP)],
Étape 2. expanser la composition (FP) pour obtenir un matériau en poly(biphényléthersulfone) expansée [matériau en mousse (P)], et
Étape 3. mouler ledit matériau en mousse (P) sous l'effet de la chaleur et de la pression pour obtenir un article expansé thermoformé,
dans lequel la composition (FP) comprend un polymère de poly(biphényléthersulfone) (P1) dans une quantité supérieure à 50 % en poids, rapporté au poids total de la composition (FP),
et dans lequel plus de 50 % en poids des motifs récurrents du polymère de poly(biphényléthersulfone) (P1) sont des motifs récurrents (R2) de formule (A) :
Ar¹-(T-Ar²)ₙ-O-Ar³-SO₂-[Ar⁴-(T-Ar²)ₙ-SO₂]ₘ-Ar⁵-O- (formule A)
dans laquelle :
- Ar¹, Ar², Ar³, Ar⁴ et Ar⁵, identiques ou différents les uns des autres et à chaque occurrence, représentent indépendamment un groupe aromatique mono- ou polynucléaire ; à condition qu'au moins un des Ar¹ à Ar⁵ soit une fraction aromatique contenant au moins un groupe biphénylène, choisie dans le groupe constitué par celles répondant aux formules suivantes : 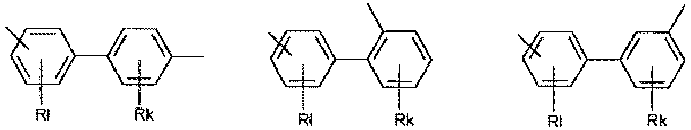
dans lesquelles R est choisi dans le groupe constitué par :
un hydrogène, un halogène, un alkyle, un alcényle, un alcynyle, un aryle, un éther, un thioéther, un acide carboxylique, un ester, un amide, un imide, un sulfonate de métal alcalin ou alcalino-terreux, un sulfonate d'alkyle, un phosphonate de métal alcalin ou alcalino-terreux, un phosphonate d'alkyle, une amine et un ammonium quaternaire, et k et 1, identiques ou différents l'un de l'autre, valent indépendamment 0, 1, 2, 3 ou 4 ; et
chacun des T, identique ou différent des autres, est une liaison ou un groupe divalent comprenant optionnellement un ou plusieurs hétéroatomes ;
n et m, identiques ou différents l'un de l'autre, représentent indépendamment zéro ou un entier de 1 à 5.

2. Procédé selon la revendication 1, dans lequel un agent de nucléation est utilisé à l'étape 1 dans une quantité de 0,1 à 5 % en poids, rapporté au poids total de la composition (FP).

3. Procédé selon l'une quelconque des revendications 1 à 2, dans lequel l'expansion à l'étape 2 est effectuée par une technique d'expansion choisie dans un groupe constitué par les procédés en cellule sous pression, les procédés en autoclave, les procédés d'extrusion, les procédés d'injection directe (Variotherm) et l'expansion de billes.

4. Procédé selon la revendication 3, dans lequel un agent gonflant est utilisé à l'étape 2 dans une quantité de 1 à 15 % en poids, rapporté au poids total de la composition (FP).

5. Procédé selon l'une quelconque des revendications 1 à 4, dans lequel le moulage du matériau en mousse (P) à l'étape 3 est effectué par un procédé de thermoformage choisi dans un groupe constitué par les procédés de formage sous vide, formage sous pression, formage à la presse et thermoformage à double coque.

6. Procédé selon la revendication 5, dans lequel le procédé de thermoformage est effectué en quatre étapes : (i) préformer le matériau en mousse (P) sous l'effet de la chaleur (c.-à-d. l'étape de préchauffage), (ii) former l'article expansé thermo formé en maintenant le matériau en mousse (P) contre un moule sous un différentiel de pression et de la chaleur (c.-à-d. l'étape de formage), (iii) refroidir l'article expansé thermoformé dans le moule (c.-à-d. l'étape de refroidissement), (iv) ébarber l'article expansé thermoformé (c.-à-d. l'étape d'ébarbage).

7. Procédé selon l'une quelconque des revendications 5 ou 6, dans lequel le procédé de thermoformage est un procédé de formage sous vide.

8. Procédé selon l'une quelconque des revendications 6 ou 7, dans lequel le matériau en mousse (P) est préchauffé à l'étape de préchauffage (i) jusqu'à une température d'au moins 200 °C et pendant un laps de temps d'au moins 10 min.

9. Procédé selon l'une quelconque des revendications 6 à 8, dans lequel le matériau en mousse (P) à l'étape de formage (ii) est maintenu contre un moule à température régulée sous un différentiel de pression dans lequel ladite pression est d'au moins 2 pouces Hg, le différentiel de pression se présentant de préférence sous la forme d'un vide.

10. Procédé selon la revendication 9, dans lequel le vide est appliqué en une étape et est appliqué depuis la pression atmosphérique jusqu'à un niveau maximal de dépression 1 [vide (1)] d'au moins 5 pouces Hg et à une vitesse de vide d'au moins 2 pouces Hg/min.

11. Procédé selon la revendication 9, dans lequel le vide est appliqué en deux étapes, dans lequel dans la première étape, le vide est appliqué depuis la pression atmosphérique jusqu'à un niveau de dépression 2 [vide (2)] d'au moins 1 pouce Hg et à une vitesse de vide d'au moins 0,2 pouce Hg/min, et dans une deuxième étape, le vide est encore maintenu constant au vide (2), ou est augmenté en continu jusqu'à un niveau maximal de vide 3 [vide (3)] d'au moins 5 pouces Hg ou est augmenté par paliers jusqu'au vide (3).

12. Article thermoformé préparé par le procédé selon l'une quelconque des revendications 1 à 11.

13. Article thermoformé selon la revendication 12, ledit article étant un composant de structure d'aéronef, un dispositif électronique mobile, un dispositif médical, un matériau de construction ou un article ménager.
